# EUROPÄISCHE PATENTSCHRIFT

(11) **EP 1 519 851 B1**
(45) Veröffentlichungstag und Bekanntmachung des Hinweises auf die Patenterteilung: **08.08.2012**
(21) Anmeldenummer: 03761401.3
(22) Anmeldetag: 20.05.2003
(51) Int. Cl.: G01C 21/26

(54) **VERFAHREN UND VORRICHTUNG ZUM BETREIBEN VON FAHRERINFORMATIONSSYSTEMEN**
METHOD AND DEVICE FOR OPERATING DRIVER INFORMATION SYSTEMS
PROCÉDÉ ET DISPOSITIF DE FONCTIONNEMENT DE SYSTÈMES D' INFORMATION DU CONDUCTEUR

(30) Priorität: 27.06.2002 DE 10228703
(43) Veröffentlichungstag der Anmeldung: 06.04.2005
(73) Patentinhaber: ROBERT BOSCH GMBH, 70442 Stuttgart (DE)
(72) Erfinder: KYNAST, Andreas, 31139 Hildesheim (DE); FAENGER, Jens, 06406 Bernburg (DE)
(86) Internationale Anmeldenummer: PCT/DE2003/001622
(87) Internationale Veröffentlichungsnummer: WO 2004/002770

(56) Entgegenhaltungen:
- WO-A-99/28145
- DE-A1- 19 813 300
- US-A- 6 046 671
- US-A- 6 163 277
- US-B1- 6 356 812

## Beschreibung

Die Erfindung betrifft ein Verfahren zum Betreiben von Fahrerinformationssystemen in einem Kraftfahrzeug sowie eine Vorrichtung zum Durchführen eines solchen Verfahrens.

In Kraftfahrzeugen existieren verschiedene Systeme, die den Fahrer mit Informationen versorgen, beispielsweise ein Navigationssystem, die üblichen Kontrollanzeigen oder ein sogenanntes Entertainmentsystem, das beispielsweise empfangene Radiostationen, die Lautstärke oder dergleichen anzeigt. Die Versorgung insbesondere der Fahrer mit Informationen erfolgt unabhängig von der aktuellen Fahrsituation, das heißt, dass die Fahrerinformationssysteme ihren Betrieb in einem einmal eingestellten Modus fortsetzen.

WO 99 28145 A offenbart ein Fahrerinformationssystem mit Sensoren zur Erfassung von Fahrzeugbetriebsdaten, bei dem im Falle einer aus den Sensordaten festgestellten Fehlfunktion oder eines vergleichbaren Ereignisses eine Information optisch und/oder akustisch ausgegeben wird. Weiterhin ist vorgesehen, dass der Fahrer durch Betätigen von Bedienelementen weitere bzw. ergänzende Informationen zu einer ausgegebenen Information abrufen kann.

Insbesondere in Fahrsituationen, bei denen der Fahrer eine erhöhte Aufmerksamkeit auf das Führen des Fahrzeuges lenken muss, kann eine zu Unzeit ausgegebene Information zu einer ungewollten Ablenkung und damit zu einer Gefährdung der Verkehrsteilnehmer führen.

Aus der US 6, 356, 812 B1 ist ein Verfahren zum Darstellen von Informationen auf einem Display in einem Kraftfahrzeug bekannt, und es ist vorgesehen, die dargestellten Informationen in Abhängigkeit der Konzentrationsfähigkeit des Fahrers vorzusehen. Die Konzentrationsfähigkeit des Fahrers wird dabei abhängig von aktuell auf den Fahrer einwirkenden Informationen, beispielsweise Navigationsinformationen. Nachteilhafterweise bleibt eine tatsächliche Konzentrationsfähigkeit des Fahrers jedoch unberücksichtigt, und auf eine Person einwirkende Informationen führen grundsätzlich zu einer individuellen Konzentrationsbelastung.

Aufgabe der Erfindung ist es, ein Verfahren zum Betreiben von Fahrerinformationssystemen in einem Kraftfahrzeug und eine Vorrichtung zur Durchführung eines Verfahrens bereitzustellen, mit dem eine erhöhte Fahrsicherheit erreicht werden kann.

Erfindungsgemäß wird diese Aufgabe dadurch gelöst, dass in Abhängigkeit von Fahrzeugbetriebsdaten, die an den Fahrer auszugebenden Informationen ausgewählt werden, so dass der Fahrer mit selektierten und an die Fahrsituation angepassten Informationen versorgt wird, ohne dass der Fahrer unnötig von der eigentlichen Aufgabe, nämlich dem Führen des Fahrzeuges, abgelenkt wird. Dabei erfolgt die Auswahl hinsichtlich der an dem Fahrer auszugebenden Informationen hinsichtlich der Informationsart, der Informationsdarstellung oder der

Informationsdichte. Die Informationsart bezieht sich vordringlich auf den Inhalt der Informationen, also aus welchem Bereich die auszugebende Information kommt, beispielsweise Unterhaltungsbereich, Fahrzeugbetriebsdaten oder Telekommunikationsbereich. Die Informationsdarstellung bezieht sich auf die Art und Weise, wie Informationen vermittelt werden, hier insbesondere die Auswahl, ob die Informationen akustisch und/oder optisch dargeboten werden und in welcher Qualität diese Darstellung erfolgt. Unterschiede in der Qualität können beispielsweise hinsichtlich der Helligkeit oder Größe der Darstellung oder in der Lautstärke der Wiedergabe akustischer Informationen bestehen. Die Informationsdichte bezieht sich auf die Menge der an den Fahrer übermittelten Informationen pro Zeiteinheit, das bedeutet, dass während Phasen erhöhten Konzentrationsbedarfes eine geringere Informationsdichte bereitgestellt wird als während eines gemütlichen Dahingleitens auf trockenen Straßen bei Tage.

Die Erfindung sieht ferner vor, dass ein Fahrerprofil erstellt wird, das die Aufnahmefähigkeit der Informationen in Bezug auf den jeweiligen Fahrer berücksichtigt. Das Fahrerprofil wird unter Berücksichtigung und in Abhängigkeit von den Fahrzeugbetriebsdaten erstellt, nachdem eine Fahreridentifikation durchgeführt wurde. Bei der Fahreridentifikation werden auch physiologische Daten wie Alter, Körpergröße, Gewicht, Sehfähigkeit oder Reaktionsgeschwindigkeit aufgenommen und anhand der aufgenommenen Fahrzeugsbetriebsdaten wird festgelegt, wie viele Informationen einer bestimmten Art einem Fahrer in einer bestimmten Fahrsituation übermittelt werden.

Vorteilhafterweise wird das Fahrerprofil über den Nutzungszeitraum auf Grund der Fahrzeugbetriebsdaten automatisch aktualisiert, so dass auf Grund einer Korrelation zwischen dem bestehenden Fahrerprofil und den Fahrzeugbetriebsdaten beispielsweise in Verbindung mit Umweltdaten festgelegt werden kann, dass ein Fahrer bei Dunkelheit wesentlich langsamer fährt, als es eigentlich notwendig wäre, woraus der Rückschluss gezogen werden kann, dass dieser Fahrer bei Dunkelheit eine erhöhte Konzentration auf das Führen des Fahrzeuges aufwenden muss und daher mit einer geringeren Infomationsdichte versorgt werden sollte.

Zusätzlich zu den Fahrzeugbetriebsdaten können Informationen auf Grund von vorhandenen Ortsdaten, die beispielsweise über ein GPS-System ermittelt wurden, der vorhandenen Uhrzeit oder Jahreszeit, zusätzlichen gespeicherten Informationen hinsichtlich der Umgebung, beispielsweise einer erhöhten Glatteisgefahr oder Navigationsdaten erfolgen, so dass beispielsweise innerhalb eines Stadtgebietes eine geringere Informationsdichte bereitgestellt wird als während einer Landstraßenfahrt.

Ein weiteres Kriterium für die Auswahl der auszugebenden Informationen sind vorliegende Verkehrsdaten, die beispielsweise auf Grund vorhandener Staus, Gefahrenstellen oder dergleichen eine Auswahl der entsprechenden Informationen bewirken bzw. unterdrücken. So kann beispielsweise eine Hierarchie innerhalb der auszugebenden Informationen aufgestellt werden, so dass bei einer hohen Verkehrsdichte bzw. bei einem zu erwartenden Stau eher die Verkehrsinformationen als beispielsweise ein Bereichswechsel einer Sendestation ausgegeben wird.

Die Daten, insbesondere die Fahrzeugzustandsdaten, werden von Sensoren erfasst und einer Rechnereinheit zugeleitet, die auf Grund vorliegender Algorithmen eine entsprechenden Zuordnung trifft und die entsprechenden Informationen auswählt, unterdrückt bzw. die Art und Weise, die Reihenfolge und die Art der Informationen bestimmt.

Eine Weiterbildung der Erfindung sieht vor, dass aus den ermittelten Daten und dem Fahrerprofil ein Wert für einen Fahrerzustand ermittelt wird. Dieser Wert wird in eine Kontextdatenbank abgelegt, die mit sogenannten Assistenzsystemen verbunden ist. Assistenzsysteme unterstützten den Fahrer bei dem Führen des Fahrzeuges und versorgen ihn mit entsprechenden Informationen. Auf Grund der ermittelten Daten in Verbindung mit dem Fahrerprofil wird eine Strategie ermittelt, die eine situationsspezifische Ausgabe der Informationen über die Assistenzsysteme ermöglichen. Es werden also Strategien für den Betrieb dieser Assistenzsysteme entwickelt, was konkret bedeutet, dass verschiedene Assistenzsysteme vorübergehend abgeschaltet werden bzw. die Ausgabe der üblicherweise nach einem starren Schema verlaufenden Informationen situationsangepasst erfolgt.

Nachfolgend wird ein Ausführungsbeispiel der Erfindung anhand der beigefügten Figuren näher erläutert werden.

Es zeigen:
- Figur 1: - den Aufbau einer Fahrerzustandsbewertung;
- Figur 2: - ein Verlaufsbild der Fahrerzustandserkennung; sowie
- Figur 3: - eine beispielhafte Darstellung von Einflussgrößen für die Ermittlung eines Fahrerzustandes.

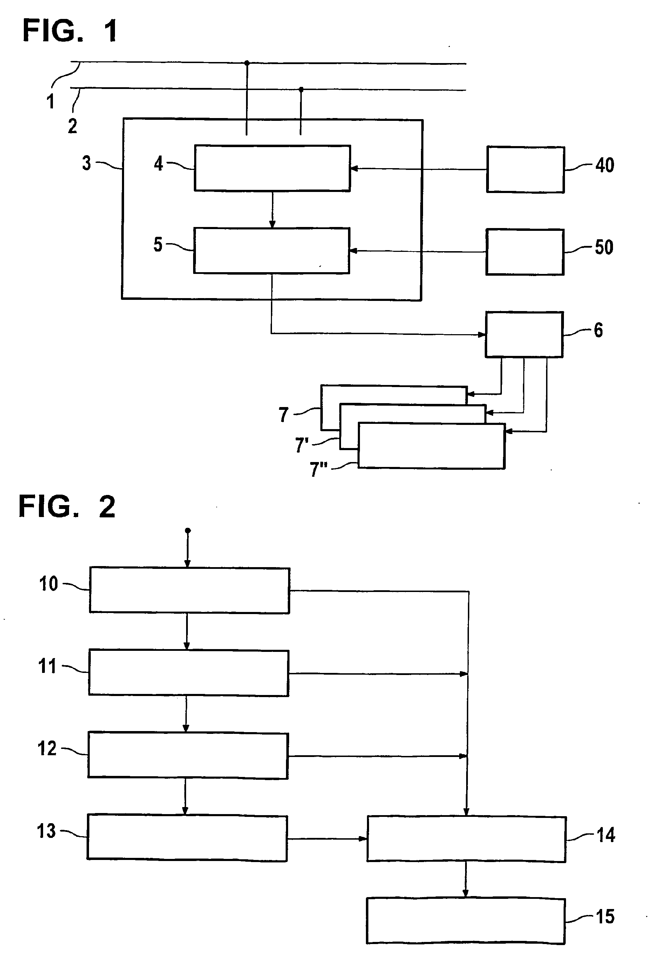

Figur 1 zeigt zwei Datenbusse 1 und 2, von denen einer beispielsweise als ein CAN-Bus ausgebildet sein kann, über die Fahrzeugbetriebsdaten und Sensordaten an eine Vorrichtung 3 übermittelt werden, in der die übermittelten Sensor- oder Betriebsdaten ausgewertet werden. In einer ersten Stufe 4 erfolgt auf der Grundlage der übermittelten Daten eine - Fahrerzustandserkennung und eine Fahrsituationserkennung, wobei diese auf der Grundlage von in einer Vorrichtung 40 abgelegten Algorithmendatenbank erfolgt, in der die Regeln für eine entsprechende Beurteilung der Fahrsituation gespeichert sind.

In einem nächsten Modul 5 erfolgt unter Zugrundelegung des in einem weiteren Modul 50 gespeicherten Fahrerprofils die Ermittlung des Fahrerzustandes, dessen Wert einer Kontextdatenbank 6 zugeführt wird. Auf diese Kontextdatenbank 6 können die im Fahrzeug vorhandenen Assistenzsysteme 7, 7', 7" zugreifen und entsprechend dem ermittelten Fahrerzustand werden die Assistenzsysteme 7, 7', 7" aktiviert, teilweise aktiviert, unterdrückt oder ihr Verhalten verändern.

Die Fahrerzustandserkennung erfolgt demnach in der Vorrichtung 3, die als Softwaremodul ausgebildet ist, das auf verschiedene Daten zugreifen kann. Dazu zählen einmal Fahrzeugbetriebsdaten, wie Geschwindigkeit, Stellung von Lichtschaltern, Lenkrad- und Pedalpositionen sowie die Häufigkeit der Betätigung von Bedienungselementen. Weiterhin können situationsspezifische Informationen, wie zum Beispiel die Außentemperatur, die Uhrzeit oder Witterungseinflüsse auf dem Softwaremodul zugeführt werden. In Zusammenspiel mit in der Datenbank 40 abgelegten Regeln erfolgt die Fahrerzustandserkennung sowie Fahrsituationserkennung, wobei anhand bestimmter Abfragen ermittelt wird, wie groß die Konzentrationsanforderungen an den Fahrer zum gegenwärtigen Zeitpunkt sind. Sind beispielsweise Nebelscheinwerfer eingeschaltet, ist dieses ein Indiz für schlechte Sichtverhältnisse, was die Konzentrationsanforderungen an den Fahrer erhöhen. Für den Fall, dass die Frequenz des Scheibenwischers hoch ist, wird von einer glatten Fahrbahn und ebenfalls schlechten Sichtverhältnissen ausgegangen, so dass ebenfalls eine geringe Ablenkung des Fahrers durch nachrangige Informationen geboten erscheint. Bei einer hohen Intensität und Frequenz der Gas- bzw. Bremspedalbetätigung ist von einer erhöhten Verkehrsdichte auszugehen, so dass auch hier erhöhte Anforderungen an die Konzentration des Fahrers gestellt werden. Andererseits kann unter Berücksichtigung der eingegebenen Uhrzeit einer gleichförmigen Geschwindigkeit und einer mittels Feuchtigkeitssensoren ermittelten trockenen Fahrbahn auf eine Fahrsituation geschlossen werden, die eine geringere Konzentration erfordert, so dass Informationen der Assistenzsysteme 7, 7', 7" ohne Einschränkungen dem Fahrer zur Verfügung gestellt werden können.

Da Situationen auf verschiedene Menschen unterschiedlich belastend wirken, ist in einer zweiten Stufe 5 die Berücksichtigung eines in einer Datenbank 50 abgelegten Fahrerprofiles vorgesehen. Das Fahrerprofil enthält Zahlenwerte, die festlegen, wie stark eine Fahrsituation Einfluss auf den jeweiligen Fahrer hat. Zum Beispiel werden ältere Menschen durch Fahrten in Dunkelheit viel stärker als junge Menschen belastet, gleiches gilt für eine nachlassende Reaktionsfähigkeit oder Belastbarkeit bei längeren Autofahrten. Andererseits können auch innerhalb der Altersgruppen starke Variationen hinsichtlich der Auswirkung verschiedener Situationen auf den jeweiligen Fahrer auftreten, so dass eine individuelle Anpassung des Fahrerprofils vorteilhaft ist. Aus der Menge der Einzelbelastungen in Verbindung mit dem Fahrerprofil wird anschließend eine Prognose über die Gesamtbelastung des Fahrers getroffen, wobei der ermittelte Wert für den Fahrerzustand in einer Kontextdatenbank 6 abgelegt werden.

Auf diese Kontextdatenbank 6 greifen alle relevanten Assistenzsysteme 7, 7', 7" zurück, die entsprechend des Fahrerzustandes aktiviert oder deaktiviert werden. Je nach Abhängigkeit der eingegebenen Daten können unterschiedliche Systeme 7, 7', 7" aktiviert werden, beispielsweise können bei gemessenen lauten Außengeräuschen auf akustische Hinweise vollständig verzichtet werden oder aber bei Dunkelheit bei entsprechend geringerer Leuchtintensität der Anzeigen oder Einblendungen erfolgen, sofern sie überhaupt dargestellt werden.

Ein mögliches Szenario des Verfahrensablaufes sieht vor, dass bei Fahrtantritt gutes Wetter und freie Straßen vorhanden sind. Das System erkennt auf Grund der Betriebsdaten, die ihm über die Datenbusse 1, 2 übermittelt werden, eine geringe Konzentrationsanforderung des Fahrers. Nach einiger Zeit setzt Regen ein, der Fahrer stellt die Wischfrequenz auf eine mittlere Stufe, woraus das System auf eine gestiegene Belastung auf Grund schlechterer Sichtverhältnisse schließt. Im weiteren Verlauf der Fahrt wird der Verkehr dichter, das heißt der Fahrer muss häufiger den Abstand zu vorausfahrenden Fahrzeugen korrigieren, indem er häufig bremst und beschleunigt. Das System folgert hieraus auf eine erhöhte Verkehrsdichte, wobei auf Grund der erhöhten Frequenz der Brems- und Gaspedalbetätigung auf eine starke Beanspruchung des Fahrers durch die Fahraufgabe geschlossen wird. Das Ergebnis der Fahrerzustandserkennung ist ein hoher Belastungswert, so dass die Assistenzsysteme 7, 7', 7", die den Fahrerzustand berücksichtigen, ihre Funktionsweisen entsprechend anpassen, indem sie unwichtige Meldungen unterdrücken und damit eine Ablenkung des Fahrers verhindern.

In Figur 2 ist der Verlauf der Fahrerzustandserkennung dargestellt, in deren ersten Schritt 10 die Sensor- und Betriebsdaten aufgenommen werden. In dem nachfolgenden Schritt 11 werden die Regeln zur Erkennung der Fahrsituation angewendet, die aus der Datenbank 40 entnommen werden. Anschließend wird in Schritt 12 unter Anwendung des Fahrerprofils eine Bewertung der Fahrsituationen vorgenommen, woraus sich nachfolgend in Schritt 13 die Gesamtfahrerbelastung aus den bewerteten Fahrsituationen ergibt. Die Sensor- und Betriebsdaten aus Schritt 10, die Fahrsituationen aus Schritt 11, die Teilbelastungen aus Schritt 13 sowie die Gesamtbelastung werden anschließend in dem Schritt 14 in der Kontextdatenbank 6 gespeichert und in Schritt 15 werden sämtliche in der Kontextdatenbank gespeicherte Daten durch die jeweiligen Assistenzsysteme 7, 7', 7" gemäß der Figur 1 abgerufen und eine entsprechende Ausgabe der Informationen an den Fahrer eingeleitet.

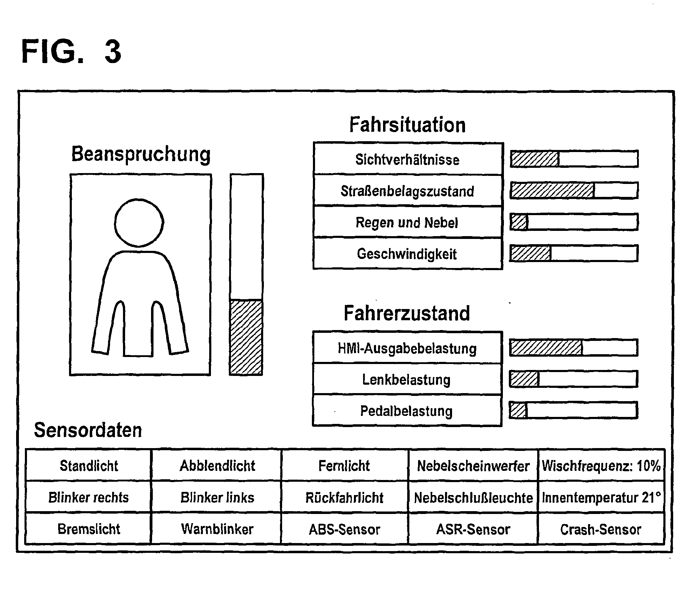

Figur 3 zeigt eine beispielhafte Darstellung der Fahrsituationen, des Fahrerzustandes sowie der Sensordaten, wobei sich die Fahrsituationen aus Sichtverhältnissen, Straßenbelagszustand, Wetterverhältnissen und Geschwindigkeiten zusammensetzt. Der Fahrerzustand errechnet sich aus der HMI-Ausgabebelastung, der Lenkbelastung und der Pedalbelastung, und als Sensordaten stehen insbesondere die Fahrzeugbetriebsdaten hinsichtlich der eingeschalteten Aggregate wie Licht, Scheibenwischer, Fahrtrichtungsanzeiger, ABS-Sensor, Fahrstabilitätssensoren oder Temperaturen zur Verfügung. Aus all diesen Daten wird die Gesamtbeanspruchung errechnet, die ein Maß dafür darstellt, welche Daten wie und wann dem Fahrer zugänglich gemacht werden.

Der Vorteil bei dem erfindungsgemaisen Verfahren besteht darin, dass aus Fahrzeugbetriebsdaten und einem Fahrerprofil eine Annahme über den Belastungsgrad des Fahrers abgeleitet werden kann und dass auf Grund des ermittelten Belastungsgrades die Funktionsweise von Fahrerinformationssystemen situationsspezifisch gestaltet werden kann. Die Fahrerinformationssysteme können ihre Informationsdichte, ihre Informationsart oder ihre Informationsdarstellung der Belastung anpassen und in einem kritischen Augenblick die Informationsausgabe unterdrücken bzw. automatische Hilfestellung leisten. Dadurch ergibt sich eine erhöhte Fahrsicherheit, da sich der Fahrer in kritischen Situationen verstärkt auf die eigentliche Fahraufgabe konzentrieren kann und nicht abgelenkt wird.

Ein weiterer Vorteil der Erfindung besteht darin, dass anstatt direkter Messungen an dem Fahrer aus Betriebsdaten ein Rückschluss auf den Fahrerzustand gewonnen werden kann. Aus den Tätigkeiten des Fahrers, der Fahrzeugdaten und weiterer, vorzugsweise über Sensoren ermittelter Randdaten können Vorhersagen über den Belastungsgrad des Fahrers getroffen werden, auf dessen Grundlage eine entsprechende Steuerung bzw. Auswahl der Assistenzsysteme 7, 7', 7" erfolgt. Darüber hinaus vereinfacht sich die Bedienung des Fahrzeuges, da die Assistenzsysteme 7, 7', 7" auf der Basis von Fahrsituation und Fahrerzustand automatisch ein- und ausgeschaltet werden, so dass die Assitenzsysteme 7, 7', 7" quasi selbstständige Entscheidungen treffen. Weiterhin wird die Anpassung der Informationsdichte von HMI-Ausgaben an eine aktuelle Situation ermöglicht, wodurch insgesamt die Belastung des Fahrers auf Grund der auf ihn einwirkenden Informationen verringert wird.

Weiterhin ist es vorgesehen, dass das Fahrerprofil und damit die Fahrerzustandserkennung durch das System an den Nutzer angepasst werden kann, indem Schlüsse aus der Fahrweise und der vorliegenden Fahrsituation zieht. Auffällige Variationen der Fahrweise bei Auftreten eines bestimmten Zustandes von Betriebs- und Sensordaten können auf eine erhöhte oder verringerte Belastung hinweisen. Eine besonders langsame Fahrweise bei Regen kann auf eine gewisse Unsicherheit des Fahrers schließen lassen, so dass hier auf eine erhöhte Belastung geschlossen werden kann. Misst das System auf Grund der Wischerfrequenz beispielsweise eine starke Regenbelastung, wird es vorteilhafterweise bei einem entsprechenden Fahrerprofil die Informationsdichte senken, so dass nur noch die nötigsten Informationen dem Fahrer während der Regenfahrt zugeleitet werden. Durch eine ständige Aktualisierung des Fahrerprofils kann auf Veränderungen in der Leistungsfähigkeit des Fahrers oder aber bei Verschlechterungen des Gesundheitszustandes geschlossen werden, so dass die Informationsdichte immer automatisch angepasst wird.

Weiterhin können Daten, die über externe Dienste an das Fahrzeug übertragen werden, in die Prognose der Fahrerbeanspruchung bzw. des Fahrerzustandes ergänzt werden; so können unter anderem Verkehrs-und Stauinformationen in die Berechnung des Fahrerzustandes einfließen. Die prognostizierte Fahrbeanspruchung kann zudem anhand von Karten- bzw. Navigationsdaten ermittelt werden, wobei die Tatsache, ob sich der Fahrer in der Stadt oder auf dem Land befindet, einen großen Unterschied hinsichtlich der zu erwartenden Belastung ausmacht.

## Patentansprüche

1. Verfahren zum Betreiben von Fahrerinformationssystemen in einem Kraftfahrzeug, wobei in Abhängigkeit von Fahrzeugbetriebsdaten die an den Fahrer auszugebenden Informationen ausgewählt werden, und wobei die Auswahl hinsichtlich der Informationsart, der Informationsdarstellung oder der Informationsdichte erfolgt, und wobei ein Fahrerprofil bezüglich der Aufnahmefähigkeit von Informationen erstellt wird, in dem physiologische Daten wie Alter, Körpergröße, Gewicht, Sehfähigkeit und Reaktionsgeschwindigkeit des Fahrers aufgenommen sind und die Informationen in Abhängigkeit von dem Fahrerprofil ausgegeben werden.

2. Verfahren nach Anspruch 1, **dadurch gekennzeichnet, dass** das Fahrerprofil über den Nutzungszeitraum aufgrund der Fahrzeugbetriebsdaten automatisch aktualisiert wird.

3. Verfahren nach Anspruch 1 oder 2, **dadurch gekennzeichnet, dass** die Informationen aufgrund von Ortsdaten, Zeitdaten, Umgebungsdaten und/oder Navigationsdaten ausgewählt werden.

4. Verfahren nach einem der Ansprüche 1 bis 3, **dadurch gekennzeichnet, dass** die Informationen aufgrund von Verkehrsdaten ausgewählt werden.

5. Verfahren nach einem der voranstehenden Ansprüche, **dadurch gekennzeichnet, dass** die Daten von Sensoren erfasst werden.

6. Verfahren nach einem der voranstehenden Ansprüche, **dadurch gekennzeichnet, dass** aus den ermittelten Daten und dem Fahrerprofil ein Wert für einen Fahrerzustand ermittelt wird, der in eine Kontextdatenbank (6) abgelegt wird, die mit Assistenzsystemen (7, 7', 7") verbunden ist, wobei die As-. sistentssysteme (7, 7', 7") in Abhängigkeit des Fahrerzustandes Informationen ausgeben oder unterdrücken.

7. Vorrichtung zur Durchführung des Verfahrens nach einem der voranstehenden Ansprüche.

## Claims

1. Method for operating driver information systems in a motor vehicle, wherein information which is to be output to the driver is selected as a function of vehicle operating data, and wherein the selection is made with regard to the type of information, the display of information or the information density, and wherein a driver's profile relating to the capacity to absorb information is produced, in which profile physiological data such as age, body size, weight, eyesight and reaction speed of the driver are recorded and the information is output as a function of the driver's profile.

2. Method according to Claim 1, **characterized in that** the driver's profile is updated automatically over the period of use on the basis of the vehicle operating data.

3. Method according to Claim 1 or 2, **characterized in that** the information is selected on the basis of location data, time data, surroundings data and/or navigation data.

4. Method according to one of Claims 1 to 3, **characterized in that** the information is selected on the basis of traffic data.

5. Method according to one of the above claims, **characterized in that** the data is collected by sensors.

6. Method according to one of the preceding claims, **characterized in that** a value for a driver's state is obtained from the obtained data and the driver's profile, which value is stored in a context database (6) which is connected to assistance systems (7, 7', 7"), wherein the assistance systems (7, 7', 7") output or suppress information as a function of the driver's state.

7. Device for carrying out the method according to one of the above claims.

## Revendications

1. Procédé de fonctionnement de systèmes d'information du conducteur dans un véhicule automobile, les informations à délivrer au conducteur étant sélectionnées en fonction de données opérationnelles du véhicule et la sélection s'effectuant du point de vue de la nature des informations, de la représentation des informations ou de la densité des informations, et un profil de conducteur concernant la réceptivité des informations étant créé, dans lequel sont enregistrées des données physiologiques telles que l'âge, la taille, le poids, l'acuité visuelle et la vitesse de réaction du conducteur, et les informations étant délivrées en fonction du profil du conducteur.

2. Procédé selon la revendication 1, **caractérisé en ce que** le profil du conducteur est actualisé automatiquement sur la période d'utilisation en se basant sur les données opérationnelles du véhicule.

3. Procédé selon la revendication 1 ou 2, **caractérisé en ce que** les informations sont sélectionnées en se basant sur des données de lieu, des données de temps, des données d'environnement et/ou des données de navigation.

4. Procédé selon l'une des revendications 1 à 3, **caractérisé en ce que** les informations sont sélectionnées en se basant sur des données de trafic.

5. Procédé selon l'une des revendications précédentes, **caractérisé en ce que** les données sont acquises par des capteurs.

6. Procédé selon l'une des revendications précédentes, **caractérisé en ce qu'**à partir des données déterminées et du profil du conducteur est déterminée une valeur pour un état du conducteur, laquelle est enregistrée dans une base de données contextuelle (6) qui est reliée avec des systèmes d'assistance (7, 7', 7"), les systèmes d'assistance (7, 7', 7") délivrant ou inhibant les informations en fonction de l'état du conducteur.

7. Dispositif pour mettre en oeuvre le procédé selon l'une des revendications précédentes.
